# EUROPEAN PATENT APPLICATION

(11) **EP 4 822 465 A1**
(43) Date of publication of application: **14.10.2026**
(21) Application number: 26168162.1
(22) Date of filing: 26.03.2026
(51) Int. Cl.: G05B 19/401, G05B 19/418

(54) **VIRTUAL PEN TEST FOR SHEET MANUFACTURING WITH DANCER ROLL INTEGRATION**

(30) Priority: 11.04.2025 US 202519177245
(71) Applicant: Honeywell International Inc., Charlotte, NC 28202 (US)
(72) Inventor: THALORE, Sudhir, Charlotte, 28202 (US); HUGHES, Michael, Charlotte, 28202 (US)
(74) Representative: Haseltine Lake Kempner LLP

(57) **Abstract**

Systems and methods for non-destructively determining a same spot error and reducing the same spot error in a system of scanners for a sheet manufacturing line. Features of a sheet passing through the sheet monitoring system, such as a splice or an edge of a material deposited or attached on the sheet, are detected by first and second scanners to synchronize machine direction position calculation by the scanners. Measurements from tensioning (dancer) rolls may be used to correct for variation in machine distance between scanners. A machine distance between the first and second scanner is dynamically calculated and used to reduce the same spot error. The detection methods also allow graphical display of same spot error without damage to the sheet material.

## Description

### BACKGROUND

On-line measurements are used to detect properties of sheet materials during manufacture to enable prompt control of the sheet-making processes and, thus, to assure sheet quality while reducing the quantity of substandard sheet material which is produced. One of the main complications in making on-line measurements during sheet-making is that the physical properties of sheet materials usually vary in the machine direction (MD) as well as in the cross direction (CD). MD refers to the direction of travel of the sheet material during manufacture, and CD refers to the direction across the surface of a sheet perpendicular to the MD.

Scanning systems are often deployed with scanners that traverse back and forth along the CD while the sheet being operated on in the manufacturing process travels past in the MD. Conventional scanning systems using one or more scanners deliver to the customer one or more cross-directional profiles that are updated periodically at the end of each scan.

In multiple scanner systems these scanner profiles are taken at different positions along the manufacturing process line. Some systems cannot correlate a position of scanning as a segment of sheet at an upstream scanner is scanned at a down-stream scanner. In other words, many conventional or prior systems do not provide "same spot" measurements (where each scanner in a series detects a parameter at the same spot on the sheet). However, same spot measurements may be helpful for diagnosing root cause of a non-conformity.

Systems and methods of making same-spot measurements under a variety of circumstances, as well as systems and methods for demonstrating that measurements are taken at the same spot, are desired.

### OVERVIEW

The present inventors have recognized, among other things, that a problem to be solved is the need for new and/or alternative systems and methods of making same-spot measurements under a variety of circumstances, as well as systems and methods for demonstrating that measurements are taken at the same spot, are desired. In some illustrative examples, detectable features on the sheet arising from the manufacturing process itself are used as landmarks for determining accuracy of machine direction (MD) distances and/or estimates in a system with multiple scanners.

A first illustrative and non-limiting example takes the form of a sheet monitoring system for use with a sheet of material moving in a machine direction as the sheet undergoes a manufacturing process, the sheet monitoring system comprising: a first scanner moveable in a cross direction perpendicular to the machine direction, the first scanner positioned at a first location; a tachometer monitoring line speed of the sheet moving in the machine direction; a second scanner moveable in the cross direction perpendicular to the machine direction, the second scanner positioned at a second location; and a controller coupled to each of the first scanner, the tachometer, and the second scanner and configured to receive data therefrom. In this first illustrative and non-limiting example, the controller may further be configured to: receive, from the first scanner, a first timestamp when a first feature is identified by the first scanner; receive, from the second scanner, a second timestamp when the first feature is identified by the second scanner; receive data regarding sheet movement during a time period between the first and second timestamps from the tachometer; and determine a same spot error using the first and second timestamps and the data regarding sheet movement.

Additionally or alternatively, the manufacturing process applies a deposition material to the sheet, and the feature is an edge of the deposition material.

Additionally or alternatively, the deposition material is deposited in at least two strips extending along the machine direction and separated by a gap in the cross direction, each strip having two side edges, and the feature is a splice between sheets.

Additionally or alternatively, the deposition material is deposited in a plurality of patches each having a first end, a second end, a first side, and a second side, the first end and second end separated by a distance in the machine direction and the first side and second side separated by a distance in the cross direction, and the feature is one of the first or second ends.

Additionally or alternatively, the data regarding sheet movement is a velocity of the sheet determined from the tachometer, and the controller is configured to determine a distance traveled by the sheet using the velocity and a difference between the first and second time stamps.

Additionally or alternatively, the controller is associated with a memory storing an estimated machine distance between the first scanner and the second scanner, and the same spot error is determined as a difference between the estimated machine distance and the determined distance traveled by the sheet.

Additionally or alternatively, the controller is further configured to update the estimated machine distance in the memory with the determined distance traveled.

Additionally or alternatively, the data regarding sheet movement includes time stamped tachometer count data, and the controller is configured to determine a distance traveled by the sheet by calculating a number of tachometer counts between the first time stamp and the second time stamp, and multiplying the number of tachometer counts by a resolution of the tachometer.

Additionally or alternatively, the controller is associated with a memory storing an estimated machine distance between the first scanner and the second scanner, and the same spot error is determined as a difference between he estimated machine distance and the determined distance traveled by the sheet.

Additionally or alternatively, the controller is further configured to update the estimated machine distance in the memory with the determined distance traveled.

Additionally or alternatively, the system further includes a graphical display, wherein the controller is configured to generate an image showing the same spot error in relation to scan paths of the first and second scanners relative to the sheet of material.

Additionally or alternatively, the system further includes a dancer roll and a dancer roll sensor having an output indicating a position of a dancer roll used in the manufacturing process, wherein the controller is further configured to incorporate an output of the dancer roll sensor to determine the same spot error.

Additionally or alternatively, the controller is further configured to issue a control signal to adjust a speed or position of at least one of the first scanner or the second scanner to reduce the same spot error.

Another illustrative and non-limiting example takes the form of a method of monitoring a sheet of material moving in a machine direction as the sheet undergoes a manufacturing process, the method comprising: at a first scanner moveable in a cross direction perpendicular to the machine direction, the first scanner positioned at a first location, identifying a first feature on the sheet at a first time, and generating a first output signal with a second time stamp associated with the first time; at a second scanner moveable in a cross direction perpendicular to the machine direction, the second scanner positioned at a second location, identifying the first feature on the sheet at a second time, and generating a second output signal with a second time stamp associated with the second time; at a tachometer, monitoring motion of the sheet moving in the machine direction and generating an output indicative of the motion of the sheet; at a controller operably linked with each of the first scanner, the second scanner, and the tachometer, determining a same spot error using the first time stamp, the second time stamp, and the tachometer output.

Additionally or alternatively, movement of the second scanner is synchronized to movement of the first scanner using a stored estimated of distance in the machine direction between the first scanner and the second scanner.

Additionally or alternatively, determining the same spot error using the first time stamp, the second time stamp, and the tachometer output is performed by: the controller determining a distance traveled by the sheet between the first time stamp and the second time stamp using the tachometer output; and comparing the determined distance traveled to the stored estimate of distance between the first scanner and the second scanner.

Additionally or alternatively, the method further comprises modifying the stored estimate of distance in the machine direction between the first scanner and the second scanner using the determined distance traveled.

Additionally or alternatively, the method also includes reducing the same spot error by adjusting a timing or a speed of one of the first scanner or the second scanner.

Additionally or alternatively, the sheet has a material deposited thereon in one or more patches, and the feature is an edge of the deposited material.

Additionally or alternatively, the feature is a splice between pieces of the sheet.

Additionally or alternatively, a portion of the sheet between the first scanner and the second scanner is engaged with a dancer roll having a dancer roll sensor generating a dancer roll sensor output indicating a position of the dancer roll, and the step of determining the same spot error adjusts the determined same spot error using the dancer roll sensor output.

This overview is intended to introduce the subject matter of the present patent application. It is not intended to provide an exclusive or exhaustive explanation. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Figure 1 shows a portion of a sheet manufacturing line;
Figure 2 is a perspective view of an illustrative scanner for sheet manufacturing;
Figures 3-4 show how a scanner crosses and scans a moving sheet of material;
Figure 5 illustrates data capture and storage for a scanner;
Figure 6 shows scanning profiles in the cross direction and machine direction;
Figure 7 shows, in block form, a method of calculating same spot error and acting in response for system calibration;
Figure 8 shows a graphical user interface for illustrating same spot error;
Figure 9 shows the inclusion of a dancer roll between two scanners;
Figure 10 shows, in block form, a method for integrating dancer roll metrics in the same spot error analysis and machine direction estimate; and
Figures 11A-11B show, in block form, illustrative methods for integrating dancer roll metrics in the same spot error analysis and machine direction estimate.

### DETAILED DESCRIPTION

On-line measurements are used to detect properties of sheet materials during manufacture to enable prompt control of the sheet-making processes and, thus, to assure sheet quality while reducing the quantity of substandard sheet material which is produced. One of the main complications in making on-line measurements during sheet-making is that the physical properties of sheet materials usually vary in the machine direction (MD) as well as in the cross direction (CD). MD refers to the direction of travel of the sheet material during manufacture, and CD refers to the direction across the surface of a sheet perpendicular to the MD.

To detect variations in sheet materials, scanning sensors are employed that periodically traverse back and forth across a sheet on which a process is being performed in the cross direction while detecting values of a selected sheet property such as basis weight or caliper along each scan. Normally, the sheet being produced is traversed from edge to edge during each scan. The time required for a typical scan is generally between a few seconds to tens of seconds depending on the cross-direction length, which can be many meters. The rate at which measurement readings are provided by such scanners is usually adjustable; a typical rate is about one measurement reading every millisecond.

In practice, measurement information provided by scanning sensors is usually assembled after each scan to provide a "profile" of the detected sheet property in the cross direction. In other words, each profile is comprised of a succession of sheet measurements at adjacent locations in the cross direction. The purpose of the profiles is to allow cross-directional variations in sheet properties to be detected easily. Based upon the detected cross-directional variations in the detected sheet property, appropriate control adjustments may be made to the sheet-making machine with the goal of reducing profile variations both in the cross direction and in the machine direction.

A scanning sensor that periodically traverses a sheet at generally constant speed cannot measure the selected sheet property at locations which are aligned exactly perpendicular to the longitudinal edges of the sheet. Due to finite sheet velocity, scanning sensors actually travel diagonally across the sheet surface, with the result that consecutive scanning paths have a zigzag pattern with respect to the direction perpendicular to the longitudinal edges of the sheet. In practice, it is typical to calculate an average of profile measurements over each scan.

Conventional scanning systems using one or more scanners deliver to the customer one or more cross-directional profiles that are updated periodically at the end of each scan. In multiple scanner systems these scanner profiles are taken at different MD positions. No attempt is made to correlate when a piece of sheet at an upstream scanner is actually (re)measured a little bit later with a down-stream scanner. In other words, many conventional or prior systems do not provide "same spot" measurements (where each scanner in a series detects a parameter at the same spot on the sheet). However, same spot measurements may be helpful for diagnosing root cause of a non-conformity, as well as providing improved accuracy as measurements are obtained from sensors at more than one scanner.

In fabricating anode or cathode electrodes, a metal foil from metal rolls is continuously coated with a mixture of active material. To achieve and maintain the quality of continuous, roll-to-roll production of electrodes, there are constant, online measurements of quality factors that are strongly linked to battery performance. Slitting machines cut the finished coated metal foils into sheets of electrodes that are assembled into the cells and batteries.

With current manufacturing techniques, once a battery is assembled, there is no readily available means of identifying and accessing specific data associated with the electrodes that are incorporated into a particular battery. The art is demanding improved production traceability so that purchasers can trace on-line measurements made during production of the electrodes all the way to the assembled electrochemical cells and batteries. Accurately tracking where features are located in the machine direction, as well as providing synchronized measurement of locations on the sheet, provides greater traceability and may enhance process monitoring capabilities.

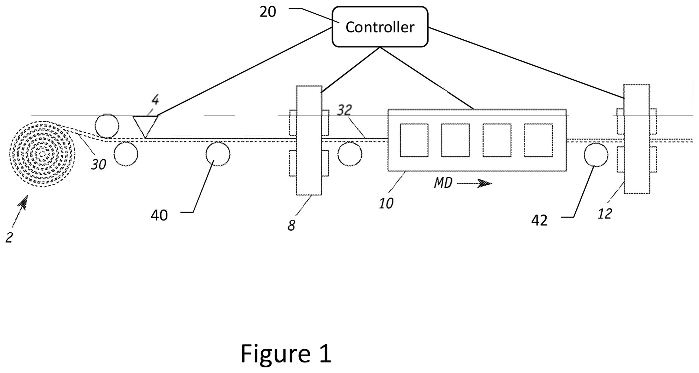

Figure 1 shows a portion of a sheet manufacturing line. The line is described in terms of coating a metal web or sheet that is used in fabricating electrodes for lithium-ion electrochemical cells and batteries. However, the manufacturing line may be used for any manufacturing process using a sheet of material, including fabrics, other metal sheets, etc.

If the line is used for fabricating electrodes for batteries, to make anodes, the electrode coating includes anodic active materials such as graphite and, to make cathodes, the electrode coating includes cathodic active materials such as a lithium metal oxide. Electrodes include a current collector metal foil that is coated on one or both sides of the foil with electrode slurry which can also include conductive additives, binder materials and solvent. After the electrode slurry is applied on a side of foil, the wet coated foil is heated in a dryer to extract the solvent to leave a solid layer of electrode material which adheres to the metal foil. Copper foil is a preferred anode current collector material and aluminum foil is a preferred cathode current collector material. Parameters and materials can vary widely, and the present concepts are not limited to this one particular environment.

As shown in FIG. 1, roll 2 is unwound by an unwinder and supplies a continuous sheet of material or sheet 30 that is coated on the top (or first) surface with a layer of electrode slurry by coater 4 which can comprise a tape casting coating device. The basis weight, thickness and other characteristics of the sheet of metal web 30 from roll 2 are usually known. In some systems, a scanner may also be positioned to measure properties of the sheet coming off of the roll, that is, for a battery manufacturing process, bare foil properties before coating may be measured and known.

Some systems, such as disclosed in US PG Pub 2023/0391571 may include markers that apply fiducial markers to the sheet 30, and readers at various points to determine with precision the MD position of the sheet by reading the fiducial markers. Such fiducial marking and reading systems can be expensive, and take up space in the line. Space is at a premium in manufacturing environment, and using less equipment reduces complexity and up-front as well as maintenance and other ongoing costs. Applying fiducial markers is sometimes not even possible as there may be no place on the sheet to place markings; that is, coating processes may use the full width of the sheet material.

The present systems and methods do not rely on fiducials from markers and scanning thereof, but may be used in conjunction with such systems as desired.

Coater 4 includes actuators that control a doctor blade to regulate the amount of slurry that is extruded onto sheet 30. Dryer 10 removes excess solvents and cures the slurry that is on the moving coated sheet 32 to form an electrode layer on the sheet. There may be several coaters 4 and/or dryers 10.

Scanner 8 measures one or more properties of the moving coated sheet entering dryer 10. Down the line, scanner 12 measures one or more properties of the moving coated sheet exiting dryer 10. In some examples, the measurements at scanner 8 can be compared with those taken at scanner 12 as part of monitoring processes and conditions inside the dryer 10. If the two measurements are taken at different locations on the sheet, if, for example, at a given location in the MD, measurement at scanner 8 occurs at a different position in the CD compared to measurement taken at scanner 12, differences in the originally applied coating at those two locations may confound analysis of the process occurring inside the dryer 10. For example, at a given location along the MD, the scanner 8 may take a measurement at a location 20 cm from the left edge of the sheet 30, and scanner 12 may take a measurement at a location 15 cm from the left edge of the sheet.

Each scanner 8, 12 may have nearby a tachometer, such as shown at 40, 42. The tachometer turns as the sheet material 30 passes by, and produces a pulse train, the periodicity or frequency of which is indicative of the velocity of the sheet material. Differences in tachometer speed can arise from one location to another if, for example, the system includes one or more dancer rolls (not shown) which can vary the length of sheet material between the tachometers 40, 42 and hence sensors 8, 12.

Figure 1 shows a very simple manufacturing line; implementations may have several coaters 4, dryers 10 and other devices or systems. Several layers of coating may be applied, dried, cured, etc., and coatings can be applied to both sides of the sheet. More than two scanners 8, 10 may be present. Further operations, including cutting or slitting the sheet, may take place. A dancer roll may be included, as detailed further below, in some examples. A system controller 20 may be provided as an overarching controller for the various components in the system, and can be coupled for data communication and control signal communication to each of the manufacturing line systems (2, 4, 40, 8, 10, 42, 12, etc) by, for example and without limitation, a data bus, ethernet or other wired coupling, optical cable, and/or wireless communications systems including any of Bluetooth^{™}, WiFi, or other 802.11 communications or other standards, as suits a given installation, plant, geography, etc.

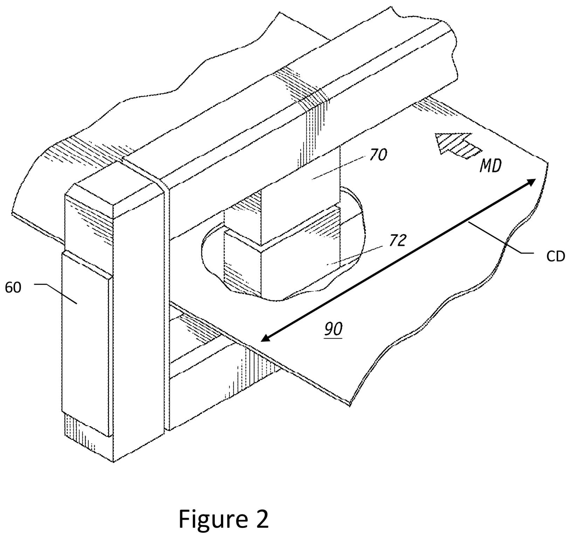

Figure 2 is a perspective view of an illustrative scanner for sheet manufacturing. The scanner 60 is configured for measuring properties of a moving sheet of material. The scanner 60 includes scanning heads 70, 72 that may, for example, enclose or house a radiation source and radiation detector, respectively. The radiation source may emit radiation, such as beta rays, that is directed toward an area on the coated sheet 90 which is moving in the MD. The intensity of the radiation from head 70 which is transmitted through the coated sheet is sensed by the radiation detector in head 72. The detector senses the amount of radiation absorbed by the coated sheet which gives a direct indication of the basis weight of the material. In this example, the radiation source emits beta radiation for the measurement of weight or thickness (caliper). Either or each scanner head 70, 72 may house an infrared sensor that detects radiation and yields a sheet temperature profile. Other techniques may be used, if desired, including, for example, those described in US Patent 11,519,710.

Each scanning head 70, 72 may include a radiation source and/or radiation detector, or may include both a radiation source and a radiation detector. Measurements can thus be taken by passing radiation from one scanning head, through the sheet 90, and to a detector in the other scanning head. Measurements can also be taken reflectively, as by generating radiation at a scanning head, directed toward the sheet 90, and measuring radiation reflected back to a detector in the same scanning head, if desired.

The dual scanner heads 70, 72 face one another and define a measurement gap that accommodates the sheet 90 (with and/or without coatings), which moves in the MD. One or more motors in the scanner 60 control the movement of heads 70 and 72, respectively. The cross directional movement of the dual scanner heads is synchronized with respect to speed and direction to maintain alignment of the dual scanner heads 70, 72. As the dual scanner heads 70, 72 move, the tachometer readouts are captured by the system so that position of the scanner heads with respect to position of the sheet 90 as it moves in the MD can be maintained. The scanner also includes a position sensor, such as an encoder or tachometer coupled to controls that move the scanner heads 70, 72, providing an indication of position of the scanner heads 70, 72 at a particular time - that is, any position sensing measurements may be time stamped in illustrative examples. Using such data, the instantaneous MD and CD position of scanner measurements can be determined.

Weight, caliper and temperature are merely examples of characteristics that can be measured using the scanning heads. Scanning may include seeking particular chemical markers, such as by scanning with one or more wavelengths of light to detect the presence, absence, or concentration of materials in the sheet and/or coating thereon. Any suitable or desired characteristic may be scanned, as suits a particular implementation. Different scanners and/or settings for scanners can be used throughout a given manufacturing line.

In some examples, the various components of the manufacturing system include controllers and/or processors that manage operation of the individual components. As shown in Figure 1, the overall system can be managed by a system controller 20. The system controller 20 may take many forms, including, for example, a microcontroller or microprocessor, coupled to a memory storing readable instructions for performing methods as described herein, as well as providing configuration of the controller for the various examples that follow. Some examples may use a computer as the system controller.

The system controller 20 may include one more application-specific integrated circuits (ASIC) to provide additional or specialized functionality, such as, without limitation a signal processing ASIC that can filter received signals from one or more sensors using digital filtering techniques. Logic circuitry, state machines, and discrete or integrated circuit components may be included as well. The skilled person will recognize many different hardware implementations are available for a controller.

In an illustrative configuration, for example, one or more busses, optical fiber networks, ethernet, other hardware links and/or wireless or other communications links are provided between the various components and the system controller 20. The system controller 20 can issue commands to the various elements of the system and receives data and other feedback from each component. The system controller 20 can thus operate to synchronize operations by the various parts of the manufacturing line, including the scanners, coaters, dryers, and drive motors for moving the sheet through the system from roll 2 to an end roll (not shown) or cutting apparatus, for example.

The system controller 20 may be a separate component from the rest of the system as shown in Figure 1. Optionally, instead, the system controller 20 may be implemented on a controller associated with one of the various components shown in the system, for example and without limitation, by providing a machine readable instruction set on a non-transitory medium operably linked to the scanners, dryer, coater, etc. in the system. The system controller may instead be implemented as a cloud-based system such as on a remote server.

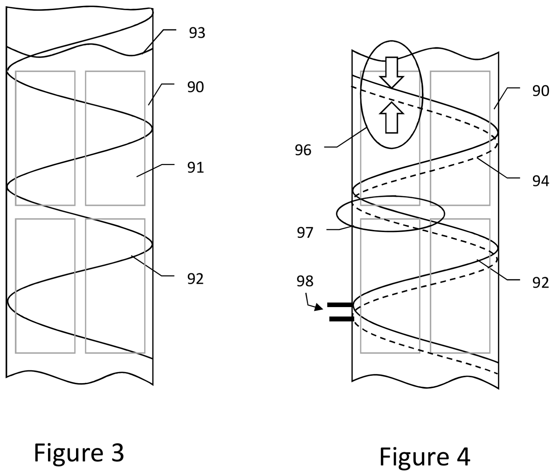

Figures 3-4 show how a scanner crosses and scans a moving sheet of material. Using the system shown in Figure 1 for reference, a scan may be made at the first scanner 8, with the scanning head(s) for the first scanner 8 traveling back and forth across the sheet of material 90, following a path as shown at 92. While this scan path is depicted as being entirely on sheet, it is also common for the scan path to include off sheet areas so that the sheet edges are fully scanned.

In this example, the sheet 90 has coating material applied in patches 91, with discontinuities or gaps in each of the MD and CD. Coating material may be applied in strips instead, if desired, such that gaps are present in the CD but not the MD. The material 90 may also include one or more splices, as shown at 93, where two sheets of material are attached together. As the scanner travels back and forth along path 92, the edges of the patches 91 and the splice 93 may each be detected by the scanning heads, as further discussed below.

Figure 4 shows how two scanners can operate with offset. The path scanned by a first scanner (such as scanner 8) is shown at 92. The broken line 94 shows a path scanned by the second scanner 12. This results in an offset shown at 96, with a distance between the two paths. This distance 96 can be described as the same spot error. The goal may be to minimize same spot error 96. It can be seen that the scans will cross the edges in the CD of each patch and may, from time to time, also capture the gap between patches in the MD as shown at 97.

Minimization of same spot error can be achieved by controlling actuation of each scanner. For example, during continuous operation, each scanner desirably travels at the same velocity in the CD, and the sheet of material generally moves with a constant velocity in the MD through the system (though presence of dancer rolls, as described below, modifies material velocity by introducing localized delays). By adding a small delay to the movement (a short pause at an edge, for example), the travel paths can be synchronized amongst the various scanners to minimize the same spot error 96. As scanning heads must turn around they cannot operate at a constant velocity; therefore the same spot error can also be caused by mismatches in scanning head acceleration and velocity parameters. Using the scanner encoders these errors can be measured and corrected as described in various examples herein.

One control approach defines a start time for scanner travel from an edge, as indicated at 98, based on the position of the material sheet 90 relative to the scanner. Other approaches can be selected, as desired including, for example, increasing the velocity of a scanner as it moves in the CD to "catch up" to other scanners in the system, and/or omitting a cross-scan with a scanner to adjust timing thereof.

The desired degree of minimization of same spot error may depend on tolerance of a particular manufacturing line or quality assurance system, as well as, for example, scanner accuracy and/or spot size. In a non-limiting numerical example, if a radiation source and/or detector of a scanner scans a circle of the product with a radius of 5 mm, then a same spot error 96 of less than 5 mm may be acceptable. Minimization to zero mm of offset is not generally required, but each system and/or manufacturing process may have its own threshold for acceptability.

One prior way of addressing and minimizing the same spot error 96 is to physically position a marker, or pen, on the scanner heads in a manufacturing line to create physical markings on the sheet 90. Manual adjustments would then be made to timing of the scanners along the line to calibrate each scanner until the same spot error 96 was minimized throughout the line. The process is painstaking and slow, and damages the sheet 90 as it passes through the line, resulting in wasted product. Once the whole line is set, miscalibration may arise, such as due to movement in the line, error, power outage, etc., and/or a change to the process and increase same spot error, requiring line shut-down to recalibrate with attendant delay, waste and other costs. Further, a dancer roll, if present, may change the effective spacing between scanners whenever the dancer roll moves, again throwing off the calibration. New and improved methods are desired.

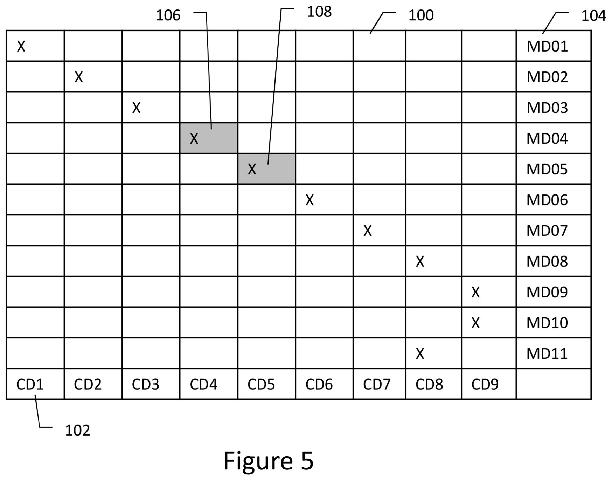

Figure 5 illustrates data capture and storage for a scanner. The scanner takes discrete measurements, which are treated as cells 100, each having a cross direction location (CD1 to CD9, as shown at 102), and a machine direction location (MD01 to MD11, as shown 104). In implementation, there may be thousands of cells in the CD, and the number of cells in the machine direction is essentially unlimited, as the systems at issue may operate continuously for a long period of time (particularly as the sheet is spliced from one roll to the next). As the scanner travels in the CD, and the sheet travels in the MD, the cells marked with an X are scanned. Depending on the velocity of the sheet material and/or scanner, there may be more than one measurement in a given CD column or MD row, though this need not be the case.

The result is an array or vector of stored values, each stored as CDn and MDmm, with a scanned "value", which may be any one or more of weight, thickness/caliber, temperature, or any other desired parameter that is being measured. The parameters can be compared to desired process values to monitor the process. In some examples the measured values may provide traceability within the process for quality system purposes.

The measurement values can also be used to detect features on the moving sheet. For example, with patch or strip manufacturing, edges can be detected. If sheets are spliced together, the splices may be detected. In a simplest approach, comparing one sampled value to the next allows edges to be detected in the layers that are applied to the sheet. This can be understood from the shaded cells at 106, 108. The scanned value at CD4, MD04 may be represented as Wn, and the scanned value at CD5, MD05 may be represented as Wn+1. An edge location can be declared if this following is met:$\left|Wn- Wn+1\right| > {Th}_{edge}$ In which Th_{edge} is a threshold value for identifying an edge. Next, if Wn is greater than Wn+1, then this simple example will determine that a step down from a patch/strip to the sheet has been crossed; otherwise, the step is up from the sheet to the patch/strip. More sophisticated approaches may be used, as desired, to detect edges.

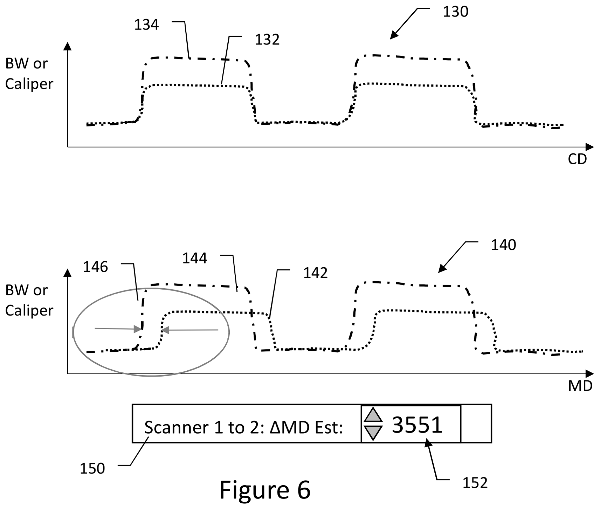

Figure 6 shows scanning profiles in the cross direction and machine direction. The upper graphic 130 compares scanning profiles using the cross direction position in the X-axis and basis weight or caliper in the Y-axis. Here, the values measured during a scan across the moving sheet at a first scanner are shown at 132, and at a second scanner at 134.

Presumably a deposition of material has occurred between the two scanners. Alternatively, line 134 may represent a scan before drying, baking or curing, and line 132 after. In any event, two scans are shown.

The scans represent a single sweep across the sheet of material. Given matching velocity of the sheet material at each scanner, and matching velocity of each scanner in the CD, it is to be expected that the edges of the profiles will line up, as shown. That is, when crossing in the cross direction, the edges of a strip or patch should appear at the same CD location for each. The CD scan provides a check of whether the scanners and the sheet material are, in essence, lined up in the MD.

The lower graphic 140 compares the scanning profiles using the machine direction in the X-axis and the basis weight or caliper in the Y-axis. Here is where the differences in edges can be used to provide same spot scanning. Results of a first scan are shown at 142, and a second scan at 144. As the material moves, the scanners detect these edges in the machine direction at different places if there is same spot error. This difference is shown at 146.

At 150 a system parameter, the estimated difference in MD counts between the position of the first scanner and the second scanner (ΔMD), is shown. An initial value for ΔMD may be entered into the system at initial installation, if desired, or a calibration can be performed, for example, when a sheet splice or deliberate marker/edge on the sheet passes through the system. This initial value can then be tailored up and down manually or automatically to minimize the same spot error by a process of first identifying the distance shown at 146 between edge detection by the two scanners, and then correcting the estimated ΔMD.

As a stored value, ΔMD may represent the number of cells (see Figure 5) in the machine direction between the two scanners. If, in the example shown, each cell is 1 mm in length in the MD, then the distance would be 3.551 meters when the value for ΔMD is as shown at 152. That is, 3.551 meters of sheet material separates the two scanners in the system, according to the stored ΔMD. If a same spot error is identified from the detected features shown in Figure 6, then the stored ΔMD is adjusted up or down. In the example shown, the second scanner (profile 144) detects the edge earlier in the MD than the first scanner (profile 142). Increasing the stored value for ΔMD will reduce the same spot error.

When the stored value ΔMD is changed, the system responds by adjusting the timing of the scanners. Increasing ΔMD would lead to the system either reducing a delay used at the first scanner, or increasing a delay the second scanner, reducing the same spot error 146. That is, in some examples, each scanner may be operable with a scanning delay in which the scanner sits at an edge for a period of time. To adjust in response to a change in ΔMD, an extra delay, or a reduced delay, can be used for one iteration (or more, as desired) of the scanner's sweep. In other examples, the scanners operate in a normal mode without any introduced edge delays, but when an adjustment is desired, one or more scanners add a delay in response to a requested or commanded adjustment.

Thus, in this example, the detected feature on the sheet material (an edge of a patch or strip deposited thereon, though a seam or splice could be used instead), is used to identify and determine/measure the same spot error. The system, for example, embodied by a controller operating on stored machine-readable instructions, responds by controlling the scanners in the system to perform adjustment(s) to reduce the same spot error. The feature detection can be used similar to a calibration, allowing MD position measurements to be used by themselves to determine same spot error.

The detected feature may be any of a strip edge, a patch edge, a patch gap (space between patched in the MD), a splice, or an intentionally placed marker. Some systems may use features that represent changes in sheet properties detectible in the MD, as opposed to those changes only detectible in the CD, as such changes provide information about the MD which should be repeatably detectable as the sheet moves in the manufacturing line. An intentionally placed marker may include, for example, a piece of deposited material which passes across most or all of the sheet of material which is placed for the purpose of being detected by the scanners. The placed marker may be made of a material which is immune to, or at least compatible with (that is, will not break down) the processes in the system, and preferably does not contaminate and/or otherwise affect the rest of the sheet of material, the fixtures and rollers in the system, etc. A placed marker may be positioned in a patch gap for example, or near a splice, if desired, and then removed prior to subsequent processing of the strip of material. A placed marker may instead be positioned on or over a strip or patch if desired, though this may necessitate discarding one or more pieces of the manufactured material sheet. Additionally or alternatively, a placed marker may be positioned at the edge of the sheet.

The CD scan at 130 may resemble, at least partly, the MD scan at 140 if a patch process is used and the scan path of the scanners passes over a gap between patches in the MD. An example is shown in Figure 4 at 97. Again, the system may respond if the same spot error is identified by adjusting ΔMD.

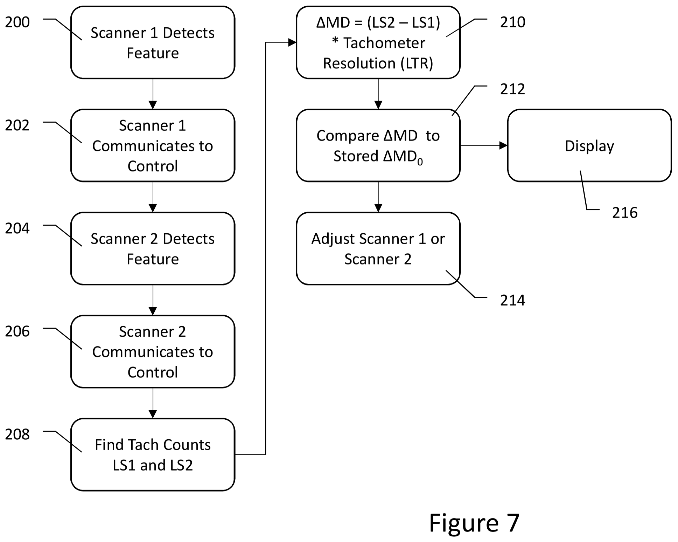

Figure 7 shows, in block form, a method of calculating same spot error and acting in response. In the illustrative example, at 200, a first scanner ("Scanner 1") detects a feature on the sheet of material, such as a strip edge, a patch edge, a patch gap, a splice, or an intentionally placed marker. Scanner 1 then communicates to system controller, as indicated at 202. The communication may indicate that the feature has been detected, such as by communicating a first time stamp and tachometer count at which the feature was detected at Scanner 1, and/or an output from a first tachometer associated with (adjacent to, preferably) Scanner 1. The tachometer output may indicate, for example and without limitation, a velocity and MD position of the sheet material moving past the tachometer.

Next, at 204, another scanner ("Scanner 2") also detects a feature. Preferably the same feature is detected at blocks 200 and 204; to ensure this, the system may be provided with an existing or initial calibration that approximates the ΔMD between Scanner 1 and Scanner 2. The operation at 204 is not necessarily a commanded step; the feature may be detected as part of the standard operation of the scanner or may be detected by post-scanning analysis. Indeed, the operation in Figure 7 does not need to occur in real-time, though it may be preferred to perform this analysis within a short period of time (30 seconds to 2 minutes, for example, or more or less, depending on line speed and/or distance in the MD between scanners, as the period of time may be that required for a given detectible feature to pass from one scanner to the next) so that adjustments, if needed, can be promptly performed. As with Scanner 1, Scanner 2 communicates to a system controller as indicated at 206. The communication may again include, for example, time stamp and/or an output by a second tachometer associated with Scanner 2.

In some examples, Scanner 2 may also be requested by the system controller to communicate a tachometer count from the second tachometer as of the time indicated by the first time stamp from Scanner 1. In other examples, the system controller may obtain a tachometer count from the first tachometer as of the time indicated by the second time stamp from Scanner 2. These additional data points may be omitted, if desired. In some examples, the two time stamps and a velocity of the sheet material from one of the two tachometers is used.

At 208, the system controller determines the tachometer counts, referred to as LS1 (first tachometer count) and LS2 (second tachometer count). Taking one of the tachometers on the line, LS1 is the tachometer count of that tachometer at the first time stamp, and LS2 is the tachometer count of the same tachometer at the second time stamp. The tachometer counts may be determined by reviewing tachometer output data, which may take the form of a time ordered series of reported tachometer counts, each entry in the series being accompanied by a time stamp.

Next, ΔMD is calculated at 210, using the difference in the tachometer counts and the tachometer resolution (which can be determined in, for example, millimeters per count). In other examples, if a velocity of the sheet is monitored and reported along with one of the time stamps, and no indication is received that the sheet velocity has changed between he first and second time stamps, rather than using LS1, LS2, and tachometer resolution, the velocity of the sheet multiplied by the difference between the two time stamps can be calculated and used as ΔMD.

The calculated ΔMD thus represents the distance traveled by the sheet during the time period between the first time stamp and the second time stamp. The calculated ΔMD is then compared to the stored ΔMD_{D}, which represents the system controllers estimate of the true distance in the machine direction between the two scanners. If the calculated ΔMD is different from the stored ΔMD_{D}, an adjustment to Scanner 1 or Scanner 2 can be made as indicated at 214. The stored ΔMD_{D} is then updated to the calculated ΔMD value.

The process shown in Figure 7 refers to two scanners. More than two scanners can be used, in which case steps 200/202 or 204/206 may be repeated for each scanner in the system. A plurality of ΔMD values would then be generated. With more than two scanners, the ΔMD values may be determined either with reference to a single scanner in the system (which may be the first in the process path, but could be any of the scanners), or may be calculated from one scanner to the next sequentially, as desired.

The process as described in Figure 7 and associated text may be performed using a system controller. Alternatively, one of the scanners or another device in the system may obtain or receive data (such as if a bus or other systematic connection of data feeds is available) and perform the method.

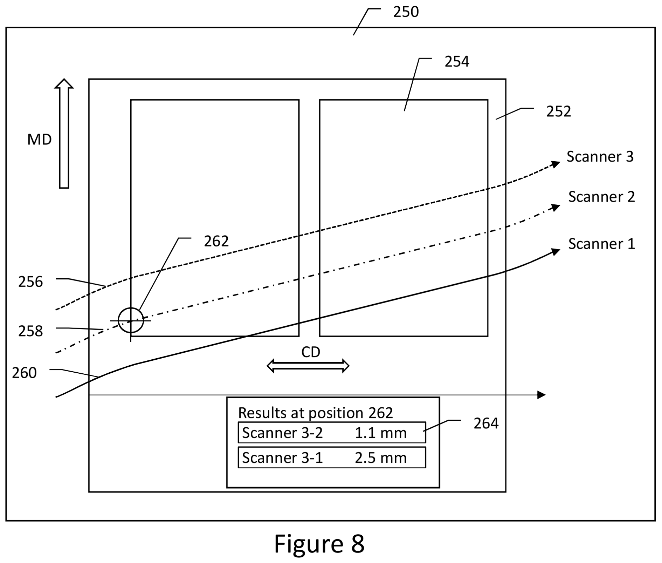

Alternatively or additionally, the system controller outputs a display as indicated at 216 which will show, to the user (such as a plant technician or quality system representative), a virtual pen test to show same spot error virtually, as illustrated in Figure 8. Figure 8 shows an illustrative graphical user interface for illustrating same spot error. The display is shown at 250, illustrating (either with an actual photo or with a graphic representation) the sheet of material 252 with an identifiable feature 254 thereon.

The feature in the example shown is a patch; a strip, applied marker, and/or splice may be shown instead or in addition; other features used in other sheet manufacturing processes maybe shown as desired. Using the measured ΔMD values for each scanner, a set of lines are then shown on the display 250, as shown at 256, 258, 260 for each of scanners 3, 2 and 1. These lines show graphically the same spot error for each scanner - that is, the different paths taken by each scanner. Information about CD position, such as from a CD encoder or other sensor, is integrated in this graphical illustration of same spot error, and can also be shown (such as separately, or paired with MD in numerical coordinates) on the user interface as desired.

The display is a "virtual" pen test as it represents what would be observed by a physical pen test, but does so without damaging the sheet material product. The user can move a cursor shown at 262. The display 250 includes a chart shown at 264 providing the numerical spot errors at the cursor location for each scanner line in the illustration.

A trend display of the same spot error between the scanners may also be shown. For example, changes in the sheet material (stretching, for example) may potentially be detected using these methods. Depending on resolution of the measurements and tachometer, small changes that may affect calibration or indicate product or fixture issues, including malfunctions, may potentially be detected.

The display 250 can be generated by setting one scanner as a "baseline" for the MD position shown (note MD line on the left side), and illustrating the edges of the strips or patches 254 at the MD and CD position for that baseline scanner (here, scanner 3, line 256). For the next scanner (scanner 2, line 258) the determined or measured ΔMD and edge crossings observed for that scanner are determined from the scanner data, and then used to plot line 258. The process is repeated for each scanner. Using the MD and/or tachometer resolution, the ΔMD values shown at 264 can be calculated in terms of suitable measurement, such as millimeters as shown.

The result is more accurate and less costly and damaging than a physical pen marking calibration. The use of physical pens make millimeter resolution difficult if not impossible, particularly if different scanner types are used in the manufacturing line. Moreover, the process can be repeated at will, and does not require stopping and starting the line, nor is manual intervention or measurement required. Indeed, the recalibration can be performed on command and/or according to a schedule, or even on a continuous basis, if desired.

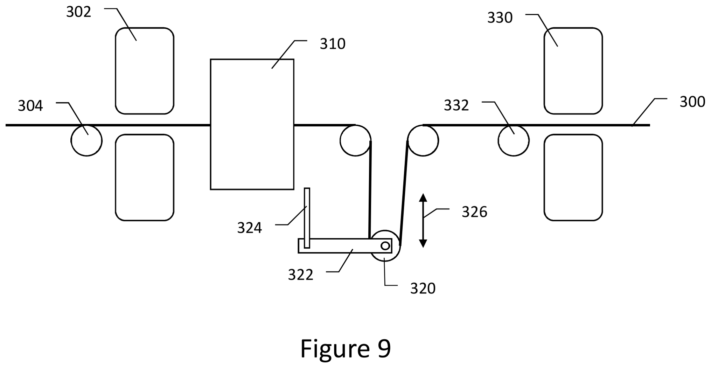

Figure 9 shows the inclusion of a dancer roll between two scanners. The analytical or virtual pen test to both illustrate and minimize same spot error has the further ability to account for dancer roll position. A sheet material 300 is seen passing by a first scanner 302 having a first tachometer 304. The sheet material 300 goes to a process device 310, which may be any process device used to manipulate the sheet 300 during a manufacturing process, including any of a baking or curing instrument, a coater, etc. After exiting the process device 310 (which can be omitted if desired), a dancer roll 320 is used to control tension of the sheet 300 through the process. The sheet 300 then goes to a second scanner 330 having a second tachometer 332.

The skilled person can recognize many uses for a dancer roll 320 in sheet manufacturing processes. A common use is the maintain a desired degree of tension on the sheet material 300. The dancer roll 320 is positioned on an arm 322, and a sensor 324 monitors a position 324 of the dancer roll. The arm 322 can move up and down, as shown at 326, as it takes up slack and maintains a desired degree of tension. When the dancer roll moves 320, however, the length of the sheet material 300 between the two scanners 302, 330 changes.

The system thus provides an ability to dynamically monitor and adjust to automatically accommodate changes in the ΔMD between scanners 302, 330. The change in ΔMD between scanners can be updated using the sensor 324 from the dancer roll 320. This is done by using the output of the sensor 324 to adjust the estimated ΔMD, and then to adjust the timing of scans at the second scanner 330 to minimize same spot error. Such modifications would then ripple through remaining scanners in the system, downstream of scanner 330.

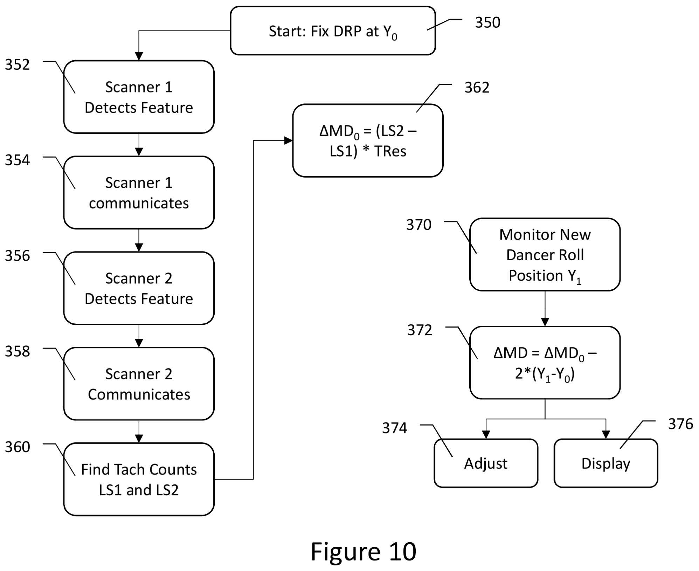

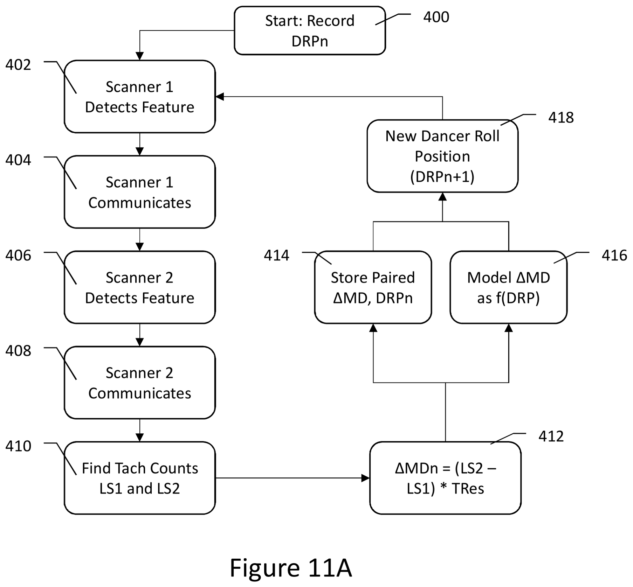

Figures 10 and 11A-11B show, in block form, illustrative methods for integrating dancer roll metrics in the same spot error analysis and machine direction estimate. Figure 10 shows a first example. For calibration, the dancer roll position is fixed at a desired position, Y₀. The process then proceeds similar to Figure 7, with Scanner 1 detecting a feature, such as a strip edge, a patch edge, a patch gap (space between patched in the MD), a splice, or an intentionally placed marker as indicated at 352. Scanner 1 communicates the occurrence of detecting the feature at block 354, for example, to a system controller. Scanner 2 also detects the feature as indicated at 356 and generates a communication to the system controller at 358. The communications may include one or more of a tachometer count and/or time stamp at which the feature was detected.

The system controller (or whichever device is doing the analysis if not the system controller) determines the tachometer counts LS1 and LS2, representing the first detection at block 352 and the second detection at block 356 as indicated at 360. The system controller (or other device) next determines the baseline, ΔMD₀, by taking the difference between LS1 and LS2, multiplied by the tachometer resolution (TRes), as indicated at 362.

For ongoing operation, the dancer roll is released from its fixed position. As shown at 370, the actual dancer roll position, Y₁, is monitored. The current ΔMD value is then determined as shown at 372, subtracting the change in dancer roll position (multiplied by two here, assuming a dancer roll as shown in Figure 9 where movement has double impact on ΔMD) from the baseline ΔMD₀. The system then adjusts the operation of Scanner 2 to accommodate the current dancer roll position, as indicated at 374. The display shown in Figure 8 may be generated as well, as indicated at 376.

While the illustration of Figure 10 shows how the dancer roll can be integrated into the analysis, it may be noted that calibration is somewhat more difficult when the dancer roll is present. However, it should also be noted that calibration can be performed on a post-hoc basis using captured data. Rather than fixing the dancer roll position at block 350, the method may be a triggered analysis in which, if the dancer roll position is observed to remain unchanged for a period of time long enough to allow a feature to pass from one scanner to the next, the captured data regarding a detected feature, time stamps and/or tachometer counts, can then be analyzed to estimate the same spot error and/or ΔMD. Thus the recalibration operation can be performed without interfering in the system process, assuming that a stable dancer roll position occurs for some minimum period of time (often less than a minute). In some examples, the recalibration can also be performed even with the dancer roll moving, as long as the initial and final dancer roll positions can be obtained.

Figures 11A-11B show another example. Here, rather than making adjustments using the dancer roll position sensor as a measurement apparatus, the output of the dancer roll is used to populate a look-up table or to form a model. Starting at 400, a dancer roll position is observed and recorded as DRPn. The method proceeds with Scanner 1 detecting a feature, such as a strip edge, a patch edge, a patch gap (space between patched in the MD), a splice, or an intentionally placed marker as indicated at 402. Scanner 1 communicates the occurrence of detecting the feature at block 404, for example, to a system controller.

Scanner 2 also detects the feature as indicated at 406 and generates a communication to the system controller at 408. The communications may include one or more of a tachometer count and/or time stamp at which the feature was detected. The system controller (or whichever device is doing the analysis if not the system controller) determines the tachometer counts LS1 and LS2, representing the first detection at block 402 and the second detection at block 402 at 410. The system controller (or other device) then determines the baseline, ΔMDn, by taking the difference between LS1 and LS2, multiplied by the tachometer resolution (TRes), as indicated at 412.

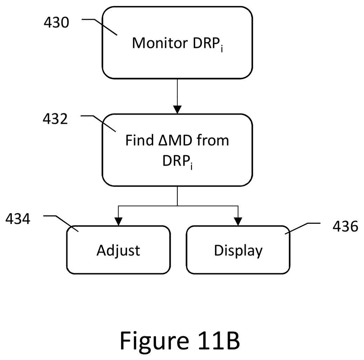

In some examples, the method then stores the paired values ΔMDn and DRPn, as indicated at 414. These may be stored, for example, as a lookup value, so that when the particular dancer roll position arises (DRPn), the estimated ΔMDn associated with that particular position is used in Figure 11B. ΔMD can thus be used to adjust the scanner release (time of initiation of a scanner sweep) in light of tracked ΔMD variations, allowing more accurate same-spot functionality.

In other examples, the method forms a model of ΔMD as a function of dancer roll position DRP as indicated at 416. A best fit analysis, for example, can be used; any suitable formulaic complexity can be used, such as first order (for example, ΔMDn = a + b*DRP) or second order analysis, or any suitable or desired model type. If so, then for any input dancer roll position, the model is used to estimate ΔMD.

When a new dancer roll position is observed, as indicated at 418, another iteration of the method in blocks 402, 404, 406, 408, 410, 412 is executed to yield another pair of ΔMDn+1 and DRPn+1 values. The method may iterate as often and as much as desired.

In operation, the method of Figure 11A can be implemented as shown in Figure 11B. Here, the dancer roll position is monitored at block 430, as DRPi. An estimate of ΔMD is found, either using a lookup table (possibly with interpolation if needed) and/or model, as indicated at 432. The estimated ΔMD is then used to adjust operation of one or more scanners, as indicated at 434. This estimated ΔMD may also be used to update a display of the process, as indicated at 436.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." Moreover, in the claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic or optical disks, magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims.

Also, in the above Detailed Description, various features may be grouped together to streamline the disclosure. This should not be interpreted as intending that an unclaimed disclosed feature is essential to any claim. Rather, innovative subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the protection should be determined with reference to the appended claims, along with the full scope of equivalents to which such claims are entitled.

## Claims

1. A sheet monitoring system for use with a sheet of material moving in a machine direction as the sheet undergoes a manufacturing process, the sheet monitoring system comprising:
a first scanner moveable in a cross direction perpendicular to the machine direction, the first scanner positioned at a first location;
a tachometer monitoring line speed of the sheet moving in the machine direction;
a second scanner moveable in the cross direction perpendicular to the machine direction, the second scanner positioned at a second location; and
a controller coupled to each of the first scanner, the tachometer, and the second scanner and configured to receive data therefrom, wherein the controller is configured to:
receive, from the first scanner, a first timestamp when a first feature is identified by the first scanner;
receive, from the second scanner, a second timestamp when the first feature is identified by the second scanner;
receive data regarding sheet movement during a time period between the first and second timestamps from the tachometer; and
determine a same spot error using the first and second timestamps and the data regarding sheet movement.

2. The sheet monitoring system of claim 1, wherein the manufacturing process applies a deposition material to the sheet, and the feature is an edge of the deposition material.

3. The sheet monitoring system of claim 1, wherein the deposition material is deposited in at least two strips extending along the machine direction and separated by a gap in the cross direction, each strip having two side edges, and the feature is a splice between sheets.

4. The sheet monitoring system of claim 1, wherein the deposition material is deposited in a plurality of patches each having a first end, a second end, a first side, and a second side, the first end and second end separated by a distance in the machine direction and the first side and second side separated by a distance in the cross direction, and the feature is one of the first or second ends.

5. The sheet monitoring system of any preceding claim, wherein the data regarding sheet movement is a velocity of the sheet determined from the tachometer, and the controller is configured to determine a distance traveled by the sheet using the velocity and a difference between the first and second time stamps.

6. The sheet monitoring system of claim 5, wherein the controller is associated with a memory storing an estimated machine distance between the first scanner and the second scanner, and the same spot error is determined as a difference between the estimated machine distance and the determined distance traveled by the sheet.

7. The sheet monitoring system of claim 6, wherein the controller is further configured to update the estimated machine distance in the memory with the determined distance traveled.

8. The sheet monitoring system of any of claims 1-4, wherein the data regarding sheet movement includes time stamped tachometer count data, and the controller is configured to determine a distance traveled by the sheet by calculating a number of tachometer counts between the first time stamp and the second time stamp, and multiplying the number of tachometer counts by a resolution of the tachometer.

9. The sheet monitoring system of claim 8, wherein the controller is associated with a memory storing an estimated machine distance between the first scanner and the second scanner, and the same spot error is determined as a difference between he estimated machine distance and the determined distance traveled by the sheet.

10. The sheet monitoring system of claim 9, wherein the controller is further configured to update the estimated machine distance in the memory with the determined distance traveled.

11. The sheet monitoring system of any preceding claim, further comprising a graphical display, wherein the controller is configured to generate an image showing the same spot error in relation to scan paths of the first and second scanners relative to the sheet of material.

12. The sheet monitoring system of any preceding claim, further comprising a dancer roll and a dancer roll sensor having an output indicating a position of a dancer roll used in the manufacturing process, wherein the controller is further configured to incorporate an output of the dancer roll sensor to determine the same spot error.

13. The sheet monitoring system of any preceding claim, wherein the controller is further configured to issue a control signal to adjust a speed or position of at least one of the first scanner or the second scanner to reduce the same spot error.

14. A method of monitoring a sheet of material moving in a machine direction as the sheet undergoes a manufacturing process, the method comprising:
at a first scanner moveable in a cross direction perpendicular to the machine direction, the first scanner positioned at a first location, identifying a first feature on the sheet at a first time, and generating a first output signal with a second time stamp associated with the first time;
at a second scanner moveable in a cross direction perpendicular to the machine direction, the second scanner positioned at a second location, identifying the first feature on the sheet at a second time, and generating a second output signal with a second time stamp associated with the second time;
at a tachometer, monitoring motion of the sheet moving in the machine direction and generating an output indicative of the motion of the sheet;
at a controller operably linked with each of the first scanner, the second scanner, and the tachometer, determining a same spot error using the first time stamp, the second time stamp, and the tachometer output.

15. The method of claim 14, wherein movement of the second scanner is synchronized to movement of the first scanner using a stored estimated of distance in the machine direction between the first scanner and the second scanner.
